# EUROPEAN PATENT APPLICATION

(11) **EP 1 526 502 A2**
(43) Date of publication of application: **27.04.2005**
(21) Application number: 04292375.5
(22) Date of filing: 06.10.2004
(51) Int. Cl.: G09G 5/00, G08G 1/0969

(54) **Method for displaying multi-level text data in three-dimensional map**

(30) Priority: 20.10.2003 KR 2003072904
(71) Applicant: LG ELECTRONICS INC., Seoul 150-721 (KR)
(72) Inventor: Cho, Hang Shin, Seongnam-Si, Gyeonggi-Do 462-838 (KR)
(74) Representative: Loisel, Bertrand

(57) **Abstract**

A three-dimensional map is displayed on a screen, and text data with different levels of density are displayed according to distances from a view point of the displayed three-dimensional map to nodes where the text data will be displayed, thereby improving readability of the text data. Further, it is possible to display the text data by locally adjusting the density of the text data on the screen.

The three-dimensional map is displayed on the screen of a display panel by converting map data with two-dimensional coordinates into those with three-dimensional coordinates by means of a perspective projection method. Text data to be displayed together with the three-dimensional map are converted into those in a three-dimensional coordinate system with an origin defined by the view point of the three-dimensional map. The converted text data are projected on a two-dimensional plane to be converted into those with screen coordinates. Then, distances from the view point of the displayed three-dimensional map to the nodes where the text data will be displayed are classified. The classified distances are determined for the converted text data with the screen coordinates. Text data of levels corresponding to the determined distances are displayed on the screen of the display panel on which the three-dimensional map is displayed.

## Description

### BACKGROUND OF THE INVENTION

### 1. Field of the Invention

The present invention relates to a method for displaying multi-level text data in a three-dimensional map, wherein text data such as place or building names are simultaneously displayed upon displaying a three-dimensional map on a display panel by converting map data with two-dimensional coordinates into map data with three-dimensional coordinates through perspective projection. More particularly, the present invention relates to a method for displaying multi-level text data in a three-dimensional map, wherein distances from a view point of a three-dimensional map displayed on a display panel to nodes where text data will be displayed are determined, and text data with different levels of density are then displayed on the display panel according to the determined distances.

### 2. Description of the Related Art

When a two-dimensional map is displayed on a display panel, text data such as major place or building names are simultaneously displayed thereon so that a user can correctly determine the position of a specific place, building or the like in the two-dimensional map.

However, if all the numerous text data are displayed in the two-dimensional map, the density of the text data is very high and thus the text data are displayed in an overlapped state. Therefore, it is difficult for the user to correctly recognize the text data.

Accordingly, upon displaying such a two-dimensional map, text data are displayed by properly changing the density of text data according to enlarged or reduced scales of the two-dimensional map so that the text data cannot overlap with one another. That is, when a two-dimensional map is displayed on a display panel, classification is made into a variety of grades ranging from an upper level in which only major text data are selected and then displayed sporadically to a lower level in which all detailed text data are displayed, and text data falling within a level corresponding to an enlarged or reduced scale of the two-dimensional map are displayed.

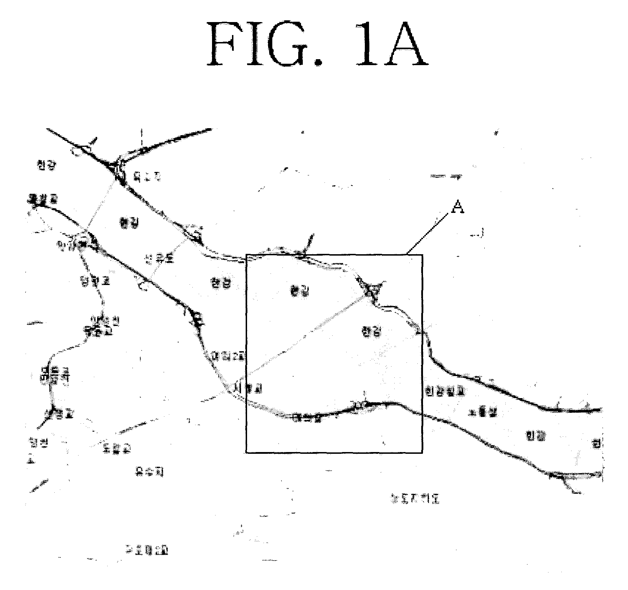

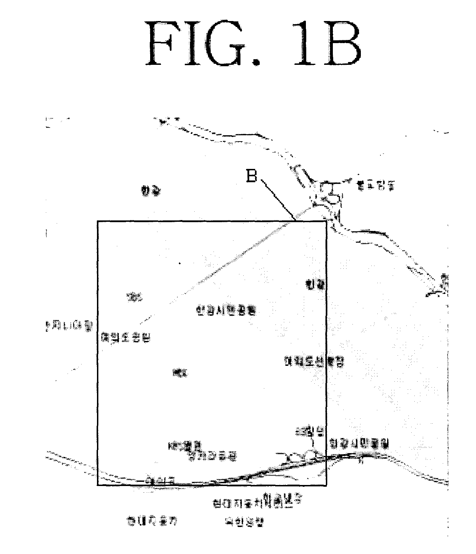

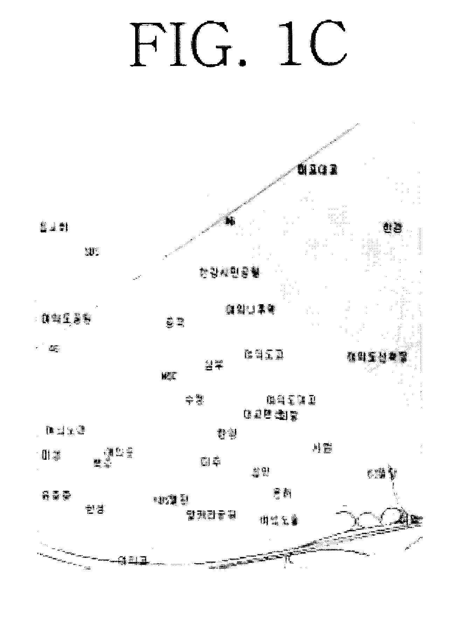

For example, text data are classified into three grades: an upper level, an intermediate level and a lower level. When a two-dimensional map is displayed on an upper scale on a display panel as shown in Fig. 1a, text data with low density falling within the upper level are displayed. When portion 'A' of the two-dimensional map shown in Fig. 1a is displayed on an enlarged scale as shown in Fig. 1b, text data with intermediate density falling within the intermediate level are displayed. When portion 'B' of the two-dimensional map shown in Fig. 1b is displayed on an enlarged scale as shown in Fig. 1c, text data with high density falling within the lower level are displayed. In such a manner, a user can appropriately view the text data.

Meanwhile, with the development of position-based technology, much attention is being paid to the displaying of three-dimensional maps on display panels in a variety of fields providing map information, including navigation systems in which current locations of vehicles such as cars are displayed together with two-dimensional maps on display panels and guide the travel of the vehicles, or websites providing map information over the Internet.

Recently, the performance of computers has been improved and a variety of expensive three-dimensional navigation systems have appeared to display three-dimensional maps, such as bird's eye views, exhibiting virtual three-dimensional effects on screens. In such three-dimensional navigation systems, numerous text data should be displayed together with a three-dimensional map contrary to three-dimensional applications for use in games and the like.

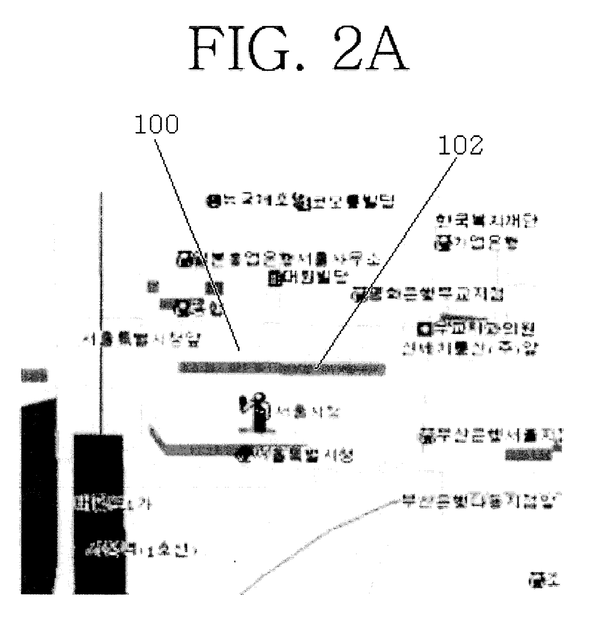

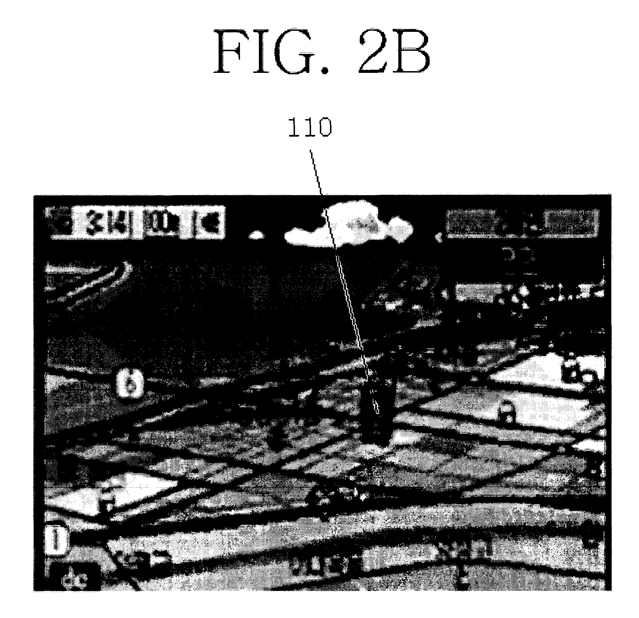

To display a three-dimensional map on a display panel in the prior art, as shown in Fig. 2a, a two-dimensional map including text data for representing building and place names is displayed on a display panel, and a shadow 102 is forcibly added to a front portion of a building 100 in the displayed two-dimensional map to exhibit the same effects as a three-dimensional map. Alternatively, as shown in Fig. 2b, a two-dimensional map is slantly displayed in a display panel, and a two-dimensional building icon 110 and text data are displayed in the two-dimensional map to exhibit three-dimensional effects.

However, the representation of such a three-dimensional map as above is not to the representation based on conversion of map data with two-dimensional coordinates into map data with three-dimensional coordinates through correct perspective projection, but merely exhibits a very rudimentary level of three-dimensional effects due to lack of techniques and a great deal amount of calculation. Thus, as compared with viewing a two-dimensional map, there may be a problem in that a user will be led to more confusion.

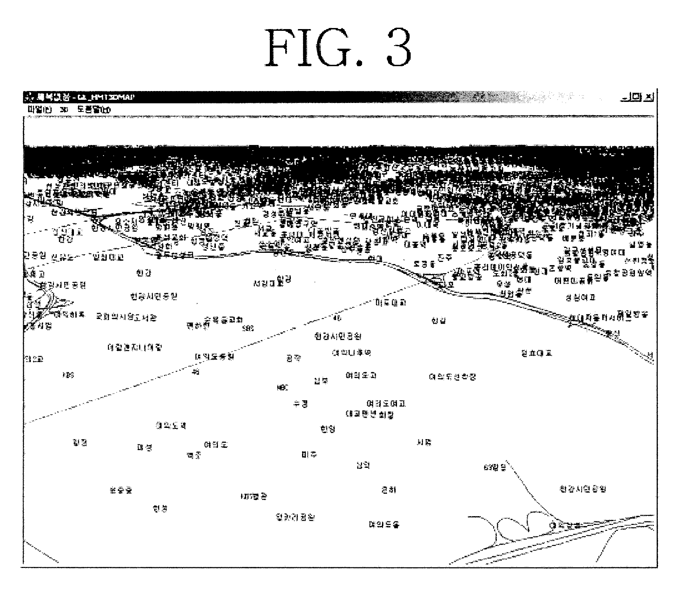

In Korean Patent Application No. 2003-32761 previously filed in the name of the present applicant, for example, as shown in Fig. 3, map data with two-dimensional coordinates are correctly converted into map data with three-dimensional coordinates by means of a perspective projection method to display a three-dimensional map on a display panel and simultaneously display text data on the three-dimensional map.

However, since all text data are displayed irrespective of distances from a view point to nodes where the text data will be displayed in the aforementioned prior art, text data are displayed in a spread state at a lower end of the display panel, i.e. at positions closer to the view point, but densely displayed in an overlapped state at an upper end of the display panel, i.e. at positions far away from the view point, as shown in Fig. 3. Accordingly, there is a problem in that a user cannot correctly recognize the text data.

### SUMMARY OF THE INVENTION

An object of the present invention is to provide a method for displaying multi-level text data in a three-dimensional map, wherein map data with two-dimensional coordinates are converted into map data with three-dimensional coordinates by means of a correct perspective projection method to display a three-dimensional map, and text data with different levels of density are displayed according to distances from a view point of the displayed three-dimensional map to nodes where the text data will be displayed, thereby improving readability of the text data.

Another object of the present invention is to provide a method for displaying multi-level text data in a three-dimensional map, wherein text data can be displayed by locally controlling the density of the text data on a display panel according to convenience of users or developers.

In a method for displaying multi-level text data in a three-dimensional map according to the present invention for achieving the objects, distances from a view point of the three-dimensional map displayed on a display panel to nodes where text data will be displayed are determined, text data with high density are displayed at positions closer to the view point and text data with low density are displayed at positions far away from the view point, thereby improving readability of the text data in the three-dimensional map.

According to a first feature of the present invention, text data with a plurality of levels of density for use in displaying a two-dimensional map on a display panel are employed as they are.

According to a second feature of the present invention, map data with three-dimensional coordinates obtained through three-dimensional map modeling, or map data with three-dimensional coordinates generated through three-dimensional modeling of map data with two-dimensional coordinates are used.

According to a third feature of the present invention, three-dimensional coordinates in the form of (x, y, k) are obtained by expanding the values of position coordinates (x, y) of text data in map data with two-dimensional coordinates. Here, k is a constant for indicating a height value of the displayed position of a piece of text data. That is, k is a value varying according to whether the piece of text data is displayed at an upper or lower portion of a building, or above or below the building.

According to a fourth feature of the present invention, when a view point is determined, a new three-dimensional coordinate system with an origin defined by the view point and the direction of a sight line is established, and three-dimensional coordinates of all map elements including text data are properly converted into those in the new three-dimensional coordinate system with the origin defined by the view point.

According to a fifth feature of the present invention, distances from the view point to positions where converted text data will be displayed are determined, and it is then determined from the determined distances whether which levels of text data with different density are used.

According to a sixth feature of the present invention, displaying text data with three-dimensional coordinates to which a correct perspective projection method is applied can be ensured, and the text data can be displayed in a state where readability thereof is maximized by controlling the density of the text data according to convenience of users or developers.

According to an aspect of the present invention, there is provided a method for displaying multi-level text data in a three-dimensional map, comprising a map displaying step of displaying the thee-dimensional map on a screen of a display panel; a coordinate converting step of converting text data with two-dimensional coordinates into those in a three-dimensional coordinate system with an origin defined by a view point of the three-dimensional map displayed on the screen of the display panel, and converting the three-dimensional coordinates into screen coordinates by performing projection on a two-dimensional plane; a distance determining step of classifying the text data converted into those with the three-dimensional coordinates in the coordinate converting step according to distances from the view point thereto; and a screen displaying step of determining the distances classified in the distance determining step with respect to the text data with the screen coordinates converted in the coordinate converting step, and simultaneously displaying text data of levels corresponding to the determined distances on the screen with the three-dimensional map displayed thereon.

The map displaying step may comprise the step of displaying the three-dimensional map on the display panel by converting map data with two-dimensional coordinates into map data with three-dimensional coordinates by means of a perspective projection method. The view point may be a current vehicle location which a control unit detects from navigation messages received by a GPS receiver, or a position elevated by a predetermined height at coordinates of a position input by a user.

The coordinate converting step may comprise a three-dimensional modeling step of expanding the text data to the three-dimensional coordinates; a view point converting step of converting the text data expanded to the three-dimensional coordinates in the three-dimensional modeling step into those in the three-dimensional coordinate system with the origin defined by the view point of the three-dimensional map displayed on the screen; and a projection converting step of projecting the text data converted into those in the three-dimensional coordinate system with the origin defined by the view point in the view point converting step on the two-dimensional plane and converting coordinates of projected positions into the screen coordinates.

According to another aspect of the present invention, there is provided a method for displaying multi-level text data in a three-dimensional map, comprising a three-dimensional environment initializing step of initializing display environments under which the three-dimensional map is displayed; a view point setting step of setting a view point and a sight line with respect to an origin defined by a reference position for two-dimensional coordinates after the three-dimensional environment initializing step; a projection parameter setting step of setting projection parameters after the view point setting step; a three-dimensional modeling step of loading map data and text data with two-dimensional coordinates for a certain area with respect to the reference position for the two-dimensional coordinates, and modeling the loaded map data and text data into map data and text data with three-dimensional coordinates; a view point converting step of converting the map data and text data with the three-dimensional coordinates modeled in the three-dimensional modeling step into those in a three-dimensional coordinates system with an origin defined by the view point set in the view point setting step; a distance determining step of classifying display nodes of the text data converted into those in the three-dimensional coordinate system with the origin defined by the view point in the view point converting step according to distances from the view point thereto; a projection converting step of obtaining projection coordinates by projecting the map data and the text data with the three-dimensional coordinates modeled in the three-dimensional modeling step on a two-dimensional plane, and of converting the projection coordinates into the screen coordinates; and a screen displaying step of displaying the map data with the screen coordinates converted in the projection converting step on the screen, and displaying the text data on the screen with different density according to the distances classified in the distance determining step.

The reference position for the two-dimensional coordinates may be coordinates of a position of a vehicle detected from navigation messages received by a GPS receiver, or coordinates of a position set by a user. The three-dimensional environment initializing step may comprise the steps of setting colors and their depths for use in displaying respective sides of buildings according to the view point, the sight line, the direction of a light source, the intensity of the light source, and angles of the respective sides of the buildings; initializing depth buffers for indicating distances from the view point to positions where objects to be displayed will be displayed; and setting a predetermined color as a background color of the screen.

The view point setting step may comprise the steps of setting a position elevated by a predetermined height at the reference position for the two-dimensional coordinates as the view point, and setting the sight line at the set view point. The sight line may be a travel direction of a vehicle.

The three-dimensional modeling step may comprise the steps of (a) converting the text data with two-dimensional coordinates into those with three-dimensional coordinates; (b) generating a bottom map for the three-dimensional map from the map data with two-dimensional coordinates after step (a); and (c) setting heights of nodes for respective buildings and generating the respective buildings with the set heights after step (b). After step (c), the method may further comprise the. step of (d) generating a travel path of a vehicle.

Between the distance determining step and the projection converting step, the method may further comprise a model removing step of removing models existing outside a visual field in the three-dimensional map, and removing overlapped and hidden sides of objects.

The projection converting step may comprise the steps of (a') obtaining the two-dimensional projection coordinates by projecting the nodes and text data converted into those in the three-dimensional coordinate system with the origin defined by the view point in the view point converting step on the two-dimensional plane; and (b') converting the two-dimensional projection coordinates obtained in step (a') into the screen coordinates for use in displaying on the screen of the display panel.

The screen displaying step may comprise the steps of (a") displaying polygonal lines of planar objects on the screen; (b") displaying three-dimensional buildings on the screen after step (a"); and (c") determining the distances classified in the distance determining step for the respective text data, and displaying text data of levels corresponding to the determined distances on the screen after step (b"). Between steps (a") and (b"), the method may further comprise the step of displaying polygon lines of a travel path of a vehicle.

### BRIEF DESCRIPTION OF THE DRAWINGS

The above and other objects, features and advantages of the present invention will become apparent from the following description of a preferred embodiment given in conjunction with the accompanying drawings, in which:
Fig. 1a is an exemplary view showing that text data are displayed in a two-dimensional map on an upper scale according to the prior art;
Fig. 1b is an exemplary view showing that portion 'A' of the two-dimensional map shown in Fig. 1a is displayed on an enlarged scale and text data are displayed therein;
Fig. 1c is an exemplary view showing that portion 'B' of the two-dimensional map shown in Fig. 1b is displayed on an enlarged scale and text data are displayed therein;
Figs. 2a and 2b are exemplary views showing a three-dimensional map and a state where text data are displayed in the three-dimensional map according to the prior art;
Fig. 3 is an exemplary view showing a state where text data are densely displayed at positions far away from a view point upon displaying the text data in a three-dimensional map according to the prior art;
Fig. 4 is a block diagram showing a configuration of a navigation system to which a display method of the present invention is applied;
Figs. 5a and 5b are flowcharts illustrating operations of a control unit according to the display method of the present invention;
Fig. 6 is a view illustrating levels of text data to be displayed on a screen according to the display method of the present invention; and
Fig. 7 is an exemplary view showing a state where text data are displayed in a three-dimensional map according to the display method of the present invention.

### DETAILED DESCRIPTION OF THE INVENTION

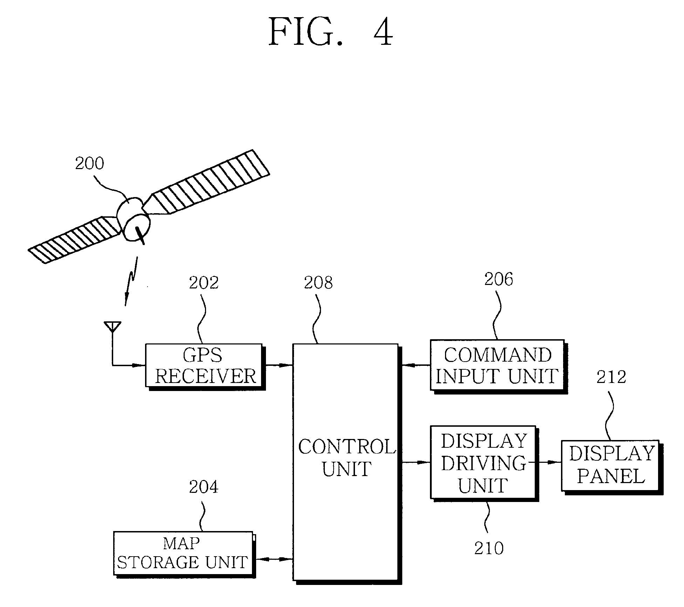

Hereinafter, a method for displaying multi-level text data in a three-dimensional map according to the present invention will be described in detail with reference to the accompanying drawings, especially Figs. 4 to 7.

Fig. 4 is a block diagram showing a configuration of a navigation system to which a method for displaying multi-level text data in a three-dimensional map according to the present invention is applied. As shown in the figure, the navigation system comprises a GPS (global positioning system) receiver 202 for receiving navigation messages transmitted by a plurality of GPS satellites 200; a map storage unit 204 for beforehand storing map data with two-dimensional coordinates therein; a command input unit 206 for receiving operation commands according to user's manipulation; a control unit 208 capable of controlling operations for determining a current vehicle location from the navigation messages received by the GPS receiver 202, for reading out map data with two-dimensional coordinates for a certain area from the map storage unit 204 based on the determined current vehicle location, for generating map data with three-dimensional coordinates by means of a perspective projection method from the read map data, and for displaying the generated map data with three-dimensional coordinates together with text data so as to guide a travel path of a vehicle; and a display driving unit 210 for causing the current vehicle location and the travel path together with the three-dimensional map and text data to be displayed on a display panel 212 under the control of the control unit 208.

The GPS receiver 202 of the navigation system constructed as above receives the navigation messages transmitted by the plurality of GPS satellites 200 and inputs them into the control unit 208.

When a vehicle travels, the control unit 208 of the navigation system detects the current vehicle location using the navigation messages received by the GPS receiver 202 and reads out map data with two-dimensional coordinates and text data for a certain area from the map storage unit 204 based on the determined current vehicle location.

Then, the control unit 208 converts the read map data with two-dimensional coordinates into map data with three-dimensional coordinates by means of the perspective projection method. That is, the read map data with two-dimensional coordinates are converted into map data with three-dimensional coordinates based on a view point set at a position elevated by a predetermined height at the determined current vehicle location.

The converted map data with three-dimensional coordinates are displayed on the display panel 212 through the display driving unit 210.

Then, the control unit 208 converts the read text data into those in a three-dimensional coordinate system with an origin defined by the view point and displays the converted text data on the display panel 212. Further, control unit guides the travel of the vehicle while indicating a travel path of the vehicle using arrows and the like on the display panel 212.

Here, the navigation system has been described by way of example as being fixedly installed at the vehicle. On the contrary, in a case where such a navigation system is installed in a mobile apparatus, there is a limitation on the storage capacity of the map storage unit 204. Accordingly, in response to commands from the command input unit 206, connection may be made to a map-providing server to download map data with two-dimensional coordinates for a certain area, for example, the entire area of Seoul City, and the downloaded map data may be stored in the map storage unit 204 and then used.

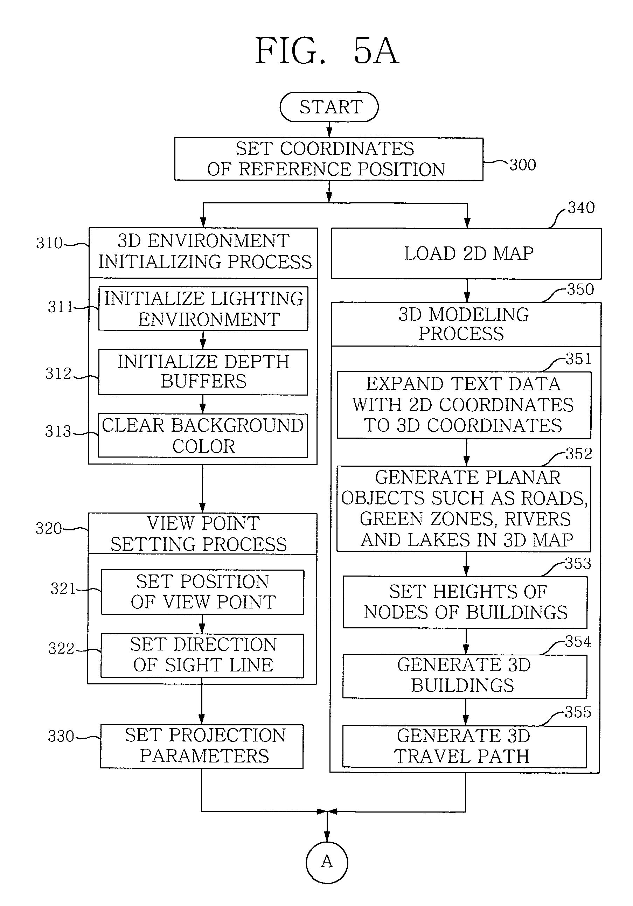

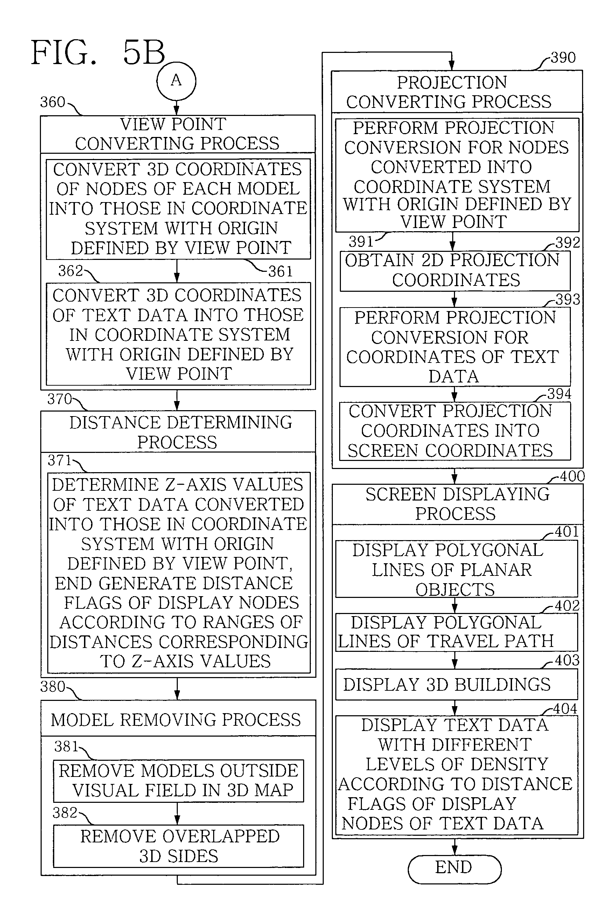

Figs. 5a and 5b are flowcharts illustrating the display method of the present invention. As shown in the figures, the control unit 208 sets coordinates of a reference position for use in generating a three-dimensional map (step 300). Here, as for the coordinates of the reference position in step 300, coordinates of a current vehicle location detected from navigation messages received by the GPS receiver 202, or coordinates input through the command input unit 206 by a user may be set as the coordinates of the reference position.

When the coordinates of the reference position is completely set in step 300, the control unit 208 performs the process of initializing three-dimensional environments for displaying map data with three-dimensional coordinates or certain models with three-dimensional coordinates on the display panel 212 (step 310). The process of initializing the three-dimensional environments performed in step 310 comprises the following steps. A lighting environment is initialized (step 311). The initialization of the lighting environment in step 311 sets a view point, a sight line, the direction of a light source, the intensity of the light source, colors and their depths for indicating respective sides of buildings according to the angles of the respective sides of the buildings, and the like. Then, depth buffers are initialized (step 312). That is, the depth buffers for indicating distances from the view point to positions where certain objects including rivers, bridges, buildings and text data will be displayed are initialized. Then, a background color to be displayed on the display panel 212 is cleared and set to a predetermined color (step 313).

When the process of initializing the three-dimensional environments is completed in step 310, the control unit 208 performs the process of setting a view point (step 320). The process of setting the view point in step 320 comprises the following steps. First, the position of the view point is set (step 321). As for the setting of the position of the view point, for example, coordinates of a position elevated by a predetermined height at the set coordinates of the reference position are set as the view point. When the view point has been set, a sight line from the set position of the view point to a three-dimensional map or model is then set (step 322). For example, a travel direction of the vehicle is set as the sight line.

When the process of setting the view point is completed in step 320, projection parameters for use in projection conversion in which map data with three-dimensional coordinates will be projected on a projection plane are set (step 330).

While the control unit 208 sequentially performs the three-dimensional environment initializing process in step 310, the view point setting process in step 320 and the projection parameter setting process in step 330, the control unit loads map data with two-dimensional coordinates from the map storage unit 204 (step 340), and performs a three-dimensional modeling process of modeling the loaded map data with two-dimensional coordinates into map data with three-dimensional coordinates (step 350).

The three-dimensional modeling process in step 350 comprises the following steps. Text data with two-dimensional coordinates loaded together with the map data with two-dimensional coordinates in step 340 are expanded to three-dimensional coordinates in the form of (x, y, k) (step 351). The expansion to the three-dimensional coordinates is to assign the values k of heights of text data, where k may vary according to whether the display positions of text data are arranged at upper or lower portions of buildings, or above or below the buildings. Then, three-dimensional planar objects for planar objects, such as roads, green zones, rivers and lakes, placed on the bottom of a three-dimensional map are generated (step 352). That is, two-dimensional coordinates of the planar objects are expanded to three-dimensional coordinates in the form of (x, y, 0) so that the planar objects can be placed on the bottom of the three-dimensional map. The heights of nodes of respective buildings are set (step 353), three-dimensional buildings having the set heights are generated (step 354), and the travel path of the vehicle is generated using arrows or dotted lines (step 355).

In step 360, the control unit 208 performs the process of converting the view point. The process of converting the view point in step 360 comprises the following steps. The nodes of the map data expanded to the three dimensional coordinates during the three dimensional modeling process are converted into those in a three-dimensional coordinate system with an origin defined by the view point, through three-dimensional shift and rotation with respect to the origin (step 361). The text data with three-dimensional coordinates are converted into those in the three-dimensional coordinate system with the origin defined by the view point (step 362). After the conversion during the view point converting process, three-dimensional coordinates are converted into those in the new three-dimensional coordinate system with the origin defined by the view point.

In step 370, the control unit 209 performs a distance determining process of determining distances from the view point to positions where the text data will be displayed. During the distance determining process in step 370, since z-axis values of the coordinates of the text data in the new three-dimensional coordinate system with the origin defined by the view point are distances from the view point to the display nodes for the text data with the three-dimensional coordinates, the z-axis values of the coordinates of the text data converted into those in the three-dimensional coordinate system with the origin defined by the view point are determined, and distance flags of the display nodes for the text data are set according to ranges of distances corresponding to the determined z-axis values (step 371).

In step 380, the control unit 208 performs a model removing process of removing unnecessary models. During the model removing process, all models existing outside a visual field in the three-dimensional map are removed (step 381), and all overlapped and hidden three-dimensional sides, i.e. overlapped and hidden sides of respective objects displayed in an overlapped state, are removed (step 382).

In step 390, the control unit 208 obtains screen coordinates on a two-dimensional screen by performing a projection converting process. During the projection converting process in step 390, the respective nodes converted into those in the coordinate system with the origin defined by the view point are subjected to projection conversion into a two-dimensional plane (step 391), two-dimensional projection coordinates are obtained (step 392), the text data are subjected to projection conversion (step 393), and the respective projection coordinates are converted into screen coordinates (step 394).

In step 400, the control unit 208 performs a screen displaying process of displaying the screen coordinates on the screen of the display panel 212 through the display driving unit 210. The screen displaying process in step 400 comprises the following steps. Polygonal lines of planar objects such as roads, green zones, rivers and lakes are displayed (step 401). Polygonal lines of the travel path of the vehicle are displayed (step 402). Then, three-dimensional buildings are displayed (step 403). Thereafter, text data with different levels of density are displayed according to distance flags of nodes for the respective text data to be displayed (step 404).

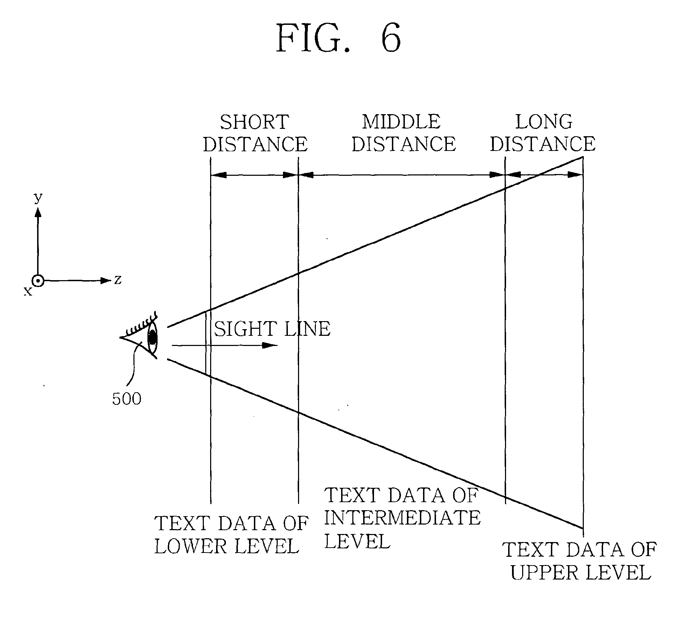

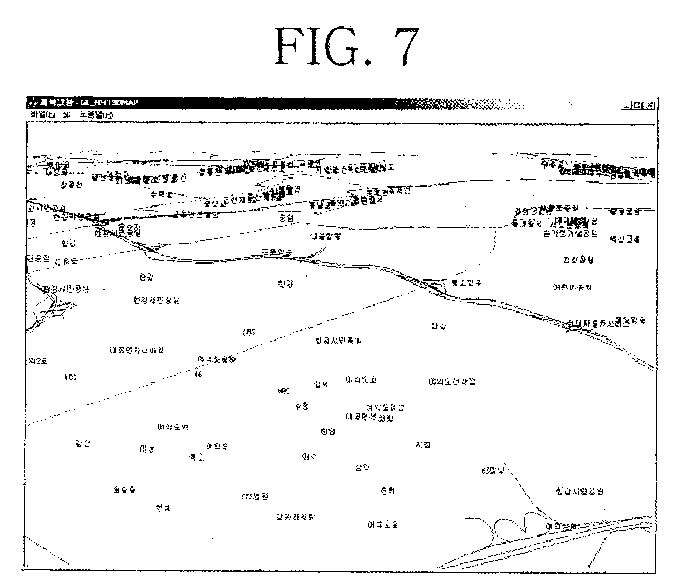

In the present invention, for example, distances that are z-axis values from a view point 500 are determined for objects to be displayed in a three-dimensional map, and classification is then made into a short distance range, a middle distance range and a long distance range, as shown in Fig. 6. Text data of a lower level with high density are displayed for objects falling within the short distance range, text data of an intermediate level with intermediate density are displayed for objects falling within the middle distance range, and text data of an upper level with low density are displayed for objects falling within the long distance range. Therefore, a user can correctly recognize the text data displayed on the screen of the display panel as shown in Fig. 7.

As described above, according to the present invention, there are advantages in that upon displaying a three-dimensional map on a display panel, text data with different levels of density are displayed according to distances from a view point to positions where the text data will be displayed so that readability of place names in the three-dimensional map can be improved, and in that the density of text data can be adjusted according to convenience of users or developers.

Although the present invention has been illustrated and described in connection with the preferred embodiment, it will be readily understood by those skilled in the art that various adaptations and changes can be made thereto without departing from the spirit and scope of the present invention defined by the appended claims. That is, although the present invention has been described by way of example as being applied to a navigation system, it is not limited thereto. The present invention can be simply applied to a variety of systems including Internet websites for providing map information so that a three-dimensional map can be displayed. In this case, a travel path of a vehicle may not be displayed. In such a manner, numerous variations can be implemented according to the present invention.

## Claims

1. A method for displaying multi-level text data in a three-dimensional map, comprising:
a map displaying step of displaying the thee-dimensional map on a screen of a display panel;
a coordinate converting step of converting text data with two-dimensional coordinates into those in a three-dimensional coordinate system with an origin defined by a view point of the three-dimensional map displayed on the screen of the display panel, and converting the three-dimensional coordinates into screen coordinates by performing projection on a two-dimensional plane;
a distance determining step of classifying the text data converted into those with the three-dimensional coordinates in the coordinate converting step according to distances from the view point thereto; and
a screen displaying step of determining the distances classified in the distance determining step with respect to the text data with the screen coordinates converted in the coordinate converting step, and simultaneously displaying text data of levels corresponding to the determined distances on the screen with the three-dimensional map displayed thereon.

2. The method as claimed in claim 1, wherein the map displaying step comprises the step of displaying the three-dimensional map on the display panel by converting map data with two-dimensional coordinates into map data with three-dimensional coordinates by means of a perspective projection method.

3. The method as claimed in claim 1, wherein the view point is a current vehicle location which a control unit detects from navigation messages received by a GPS receiver, or a position elevated by a predetermined height at coordinates of a position input by a user.

4. The method as claimed in claim 1, wherein the coordinate converting step comprises:
a three-dimensional modeling step of expanding the text data to the three-dimensional coordinates;
a view point converting step of converting the text data expanded to the three-dimensional coordinates in the three-dimensional modeling step into those in the three-dimensional coordinate system with the origin defined by the view point of the three-dimensional map displayed on the screen; and
a projection converting step of projecting the text data converted into those in the three-dimensional coordinate system with the origin defined by the view point in the view point converting step on the two-dimensional plane and converting coordinates of projected positions into the screen coordinates.

5. A method for displaying multi-level text data in a three-dimensional map, comprising:
a three-dimensional environment initializing step of initializing display environments under which the three-dimensional map is displayed;
a view point setting step of setting a view point and a sight line with respect to an origin defined by a reference position for two-dimensional coordinates;
a projection parameter setting step of setting projection parameters;
a three-dimensional modeling step of loading map data and text data with two-dimensional coordinates for a certain area with respect to the reference position for the two-dimensional coordinates, and modeling the loaded map data and text data into map data and text data with three-dimensional coordinates;
a view point converting step of converting the map data and text data with the three-dimensional coordinates modeled in the three-dimensional modeling step into those in a three-dimensional coordinates system with an origin defined by the view point set in the view point setting step;
a distance determining step of classifying display nodes of the text data converted into those in the three-dimensional coordinate system with the origin defined by the view point in the view point converting step according to distances from the view point thereto;
a projection converting step of obtaining projection coordinates by projecting the map data and the text data with the three-dimensional coordinates modeled in the three-dimensional modeling step on a two-dimensional plane, and of converting the projection coordinates into the screen coordinates; and
a screen displaying step of displaying the map data with the screen coordinates converted in the projection converting step on the screen, and displaying the text data on the screen with different density according to the distances classified in the distance determining step.

6. The method as claimed in claim 5, wherein the reference position for the two-dimensional coordinates is coordinates of a position of a vehicle detected from navigation messages received by a GPS receiver, or coordinates of a position set by a user.

7. The method as claimed in claim 5, wherein the three-dimensional environment initializing step comprises the steps of:
setting colors and their depths for use in displaying respective sides of buildings according to the view point, the sight line, the direction of a light source, the intensity of the light source, and angles of the respective sides of the buildings;
initializing depth buffers for indicating distances from the view point to positions where objects to be displayed will be displayed; and
setting a predetermined color as a background color of the screen.

8. The method as claimed in claim 5, wherein the view point setting step comprises the steps of setting a position elevated by a predetermined height at the reference position for the two-dimensional coordinates as the view point, and setting the sight line at the set view point.

9. The method as claimed in claim 8, wherein the sight line is a travel direction of a vehicle.

10. The method as claimed in claim 5, wherein the three-dimensional modeling step comprises the steps of:
(a) converting the text data with two-dimensional coordinates into those with three-dimensional coordinates;
(b) generating a bottom map for the three-dimensional map from the map data with two-dimensional coordinates; and
(c) setting heights of nodes for respective buildings and generating the respective buildings with the set heights.

11. The method as claimed in claim 10, after step (c), further comprising the step of:
(d) generating a travel path of a vehicle.

12. The method as claimed in claim 5, between the distance determining step and the projection converting step, further comprising:
a model removing step of removing models existing outside a visual field in the three-dimensional map, and removing overlapped and hidden sides of objects.

13. The method as claimed in claim 5, wherein the projection converting step comprises the steps of:
(a') obtaining the two-dimensional projection coordinates by projecting the nodes and text data converted into those in the three-dimensional coordinate system with the origin defined by the view point in the view point converting step on the two-dimensional plane; and
(b') converting the two-dimensional projection coordinates obtained in step (a') into the screen coordinates for use in displaying on the screen of the display panel.

14. The method as claimed in claim 5, wherein the screen displaying step comprises the steps of:
(a") displaying polygonal lines of planar objects on the screen;
(b") displaying three-dimensional buildings on the screen; and
(c") determining the distances classified in the distance determining step for the respective text data, and displaying text data of levels corresponding to the determined distances on the screen.

15. The method as claimed in claim 14, between steps (a") and (b"), further comprising the step of displaying polygon lines of a travel path of a vehicle.
